# EUROPÄISCHE PATENTSCHRIFT

(11) **EP 0 943 560 B1**
(45) Veröffentlichungstag und Bekanntmachung des Hinweises auf die Patenterteilung: **17.07.2002**
(21) Anmeldenummer: 99810152.1
(22) Anmeldetag: 19.02.1999
(51) Int. Cl.: B65D 88/16

(54) **Automatisierte Sackentleerungsstation**
Automated bag emptying station
Station automatisée pour vider des sacs

(30) Priorität: 23.02.1998 DE 29803071 U
(43) Veröffentlichungstag der Anmeldung: 22.09.1999
(73) Patentinhaber: Sandi, Roland, 6045 Meggen (CH)
(72) Erfinder: Sandi, Roland, 6045 Meggen (CH)
(74) Vertreter: Luchs, Willi

(56) Entgegenhaltungen:
- DE-A- 19 506 538
- DE-A- 19 628 429

## Beschreibung

Die Erfindung betrifft eine Vorrichtung nach dem Oberbegriff des Anspruchs 1.

Im Unterschied zu Flüssigkeiten und auch zu kompakten Gegenständen wird rieselfähiges Schüttgut wie etwa Kunststoffgranulat industriell meist in grösseren, sackähnlichen Gebilden aus flexiblem Material gelagert und transportiert. Die naheliegendste Methode, einen derartigen Sack zu entleeren, besteht darin, diesen einfach zu kehren. Dies ist jedoch technisch schwierig zu bewerkstelligen, sodass man es normalerweise vorzieht, den Sack bei vollem inhalt entweder unterseitig aufzuschneiden oder aber aufzuschnüren, es sei denn, er enthalte unten, d.h. im Sackboden, bereits eine leicht zu öffnende, dafür vorgesehene Stelle. Um eine unvermittelte und unkontrollierte Entleerung zu verhindern, wird der Sack hierzu meist auf einen Trichter gelegt, unter dessen Öffnung sich beispielsweise ein Förderband befindet. Mittels einer dicht über dem Band liegenden Manschette kann zudem eine übermässige, bei Anwendung dieser Methode gewöhnlich eintretende Staubentwicklung vermieden werden.

Wie schon das gängige Wort «Zusammensacken» zum Ausdruck bringt, ist das Füllen und Leeren von Säcken wegen der fehlenden Festigkeit mit Problemen verbunden. Bereits im Jahre 1931 wurde daher in einem Patent (DE 624 645) vorgeschlagen, flexible Silos - insbesondere für Getreide - an einem Traggerüst nachgiebig aufzuhängen, wobei der Rand des sackartigen Silos mittels Gewichten über Umlenkrollen rundum in die Höhe gezogen wird, ohne dass jedoch der Silosack vom Boden abgehoben wird. Dadurch wird erreicht, dass die Sackwand insbesondere beim Füllen permanent angespannt bleibt, wobei sie weniger strapaziert wird als im Falle einer vollen Aufhängung.

Das Prinzip der nachgiebigen Aufhängung wurde in der Folge auch ausgenützt - und zwar gemäss der OS DE 1 531 920 -, um einen Silosack mit unterseitiger Aus-lauföffnung zu entleeren. Der Sack wird dabei im Bereich seines Auslaufs festgehalten und ist an seinem oberen Rand einer Hubeinrichtung angeschlossen, welche die Sackwandung sowie den nicht festgehaltenen Teil des Sackbodens je nach dem Füllungsgrad soweit anhebt, bis der für einen einwandfreien Auslauf des Schüttgutes erforderliche Schüttwinkel eingestellt ist. Die Hubeinrichtung kann pneumatisch oder hydraulisch gesteuert sein.

Die Nachteile dieser Methoden, wo die Entleerung nach unten erfolgt, liegen bei der Staubentwicklung, der schlechten Dosierbarkeit des Entleerungsvorgangs und bei der Schwierigkeit des An- und Abkoppelns des Behälters, insbesondere dann, wenn ein Behälter nur teilweise entleert werden soll. Ausserdem bedarf es bei vollen Gebinden einer relativ grossen Hubleistung, auch sind die Anforderungen hinsichtlich Reissfestigkeit des Sackmaterials hoch.

In neuerer Zeit ist man infolgedessen vermehrt dazu übergegangen, das Schüttgut nicht mehr unten auslaufen zu lassen, sondern mittels eines Rohrs bzw. eines daran vorgesehenen, speziellen Saugkopfes abzusaugen, wobei dieses (dieser) von oben her in das Behöltnis eingeführt wird. Dabei ist zur Erzeugung einer Saugwirkung ein optimales Luft-/Füllgutgemisch erforderlich, was mit der Zufuhr von Sekundärluft (Falschluft) bewerkstelligt werden kann. Um Verstopfungen zu vermeiden, wird beim Sack oder beim Saugkopf bisweilen noch ein Vibrator vorgesehen. Als Behältnisse hierfür sind besonders sog. Oktabinen geeignet. Diese achteckigen Behälter mit genormtem Umfang weisen eine konsistente, meist aus Pappe bestehende Aussenwand auf und sind innenseitig mit einem Foliensack ausgekleidet. In Frage kommen aber auch sog. Big-Bags. Dabei handelt es sich um Gewebesäcke mit quadratischem Boden, welche nicht mit Stabilisierungsbehältern versehen sind, dafür aber aus einem reissfesten Material bestehen, sodass sie samt inhalt aufgehängt werden können.
Ein derartiges Absaugverfahren wird in der OS DE 42 18 331 A1 vorgeschlagen, wobei das Absaugrohr an einer heb- und senkbaren Plattform befestigt, mit einem flexiblen Schlauch verbunden und am unteren Ende vorzugsweise mit einem Gitterkorb versehen ist, der das Ansaugen von Klumpen und Folien verhindert. Durch phasenverschobenes Betätigen der verschiedenen Plattform-Aufhängungsseile kann das Saugrohr zum Pendeln gebracht werden, was den Saugeffekt verbessert. Ferner ist ein Sensor vorgesehen, der zur Erkennung einer hinreichenden Annäherung an die jeweils oberste Lage des abzusaugenden Schüttgutes dient. Das Saugrohr kann auch teleskopierbar ausgebildet sein. Ausserdem ist ein Ventil für die Dosierung der Sekundärluft vorgesehen. Das zu entleerende Behältnis wird vorzugsweise mit mehreren Zugfedern an einem Traggestell straffgezogen.
In der EPA 0 765 829 A1 sowie im Gebrauchsmuster DE 295 15 675 U1 wird ein verbessertes Saugrohr in Verbindung mit einem nach unten hin konisch verjüngten Saugkopf vorgeschlagen, welcher mit einem glockenförmigen Schwimmkörper sowie mit einer Schwingungsregelungseinrichtung versehen ist, wobei mit letzterer aber eher eine Schwingungserzeugzungseinrichtung in Form eines Vibrators gemeint ist. Durch den auf dem Schüttgut schwimmenden Schwimmkörper soll die Absaugöffnung in optimaler, horizontaler Lage gehalten und insbesondere das Kippen des Saugrohres vermieden werden. Allerdings ist angesichts des relativ voluminösen Schwimmkörpers eine relativ große, im Sack verbleibende Restmenge zu erwarten.
In der OS DE 196 28 429 A1 sowie im Gebrauchsmuster DE 296 12 187 U1 wird ferner eine Aufhängung des Sacks vorgeschlagen, welches mittels einer Hubeinrichtung in vertikaler Richtung bewegbar ist und zum Strecken des Sackes dient, wobei dessen oberer Rand von einem Hebezeug an drei Punkten gehalten wird. Eine derartige, den Sack straffende Aufhängung wird im folgenden «nachzügig» genannt. Als Hubeinrichtung kommt ein pneumatischer oder hydraulisch betätigter Hubzylinder, ein Elektroantrieb oder eine Handkurbel in Frage. Bei Einsatz eines pneumatischen Zylinders kann eine bestimmte, konstant nach oben ziehende Kraft vorgegeben werden. Infolge der Streckung rieselt das am Rand befindliche Schüttgut zur Mitte des Sackes hin, wo sich das Absaugrohr bzw. der Absougkopf befindet, und kann so besser aufgenommen werden. Unterschreitet das Gewicht von Sack und inhalt den der Zugkraft entsprechenden Wert, was gegen Ende des Entleerungsvorgangs der Fall ist, so wird das Ganze vom Boden abgehoben und der Sack noch stärker gegen unten zugespitzt, sodass eine fast restlose Entleerung möglich wird. Ausserdem zeigt das Hochheben des Sackes dem Betreiber an, doss der Vorgang seinem Ende zugeht und ein Sackwechsel eingeleitet werden kann. Ferner wird vorgeschlagen, die Endstellungen des Hubzylinders, d.h. die maximalen Ausfahr- und Einzugslängen der Kolbenstange, variabel einstellbar vorzusehen und somit an unterschiedliche Behältnishöhen anpassen zu können. Wie dies konkret zu bewerkstelligen ist, wird allerdings nicht näher erläutert. Insbesondere ist aber die Idee einer nachzügigen Aufhängung des Foliensacks bei einer Entleerung mittels eines von oben her eingeführten Saugrohres in der Beschreibung respektive im Anspruch 15 der älteren, oben erwähnten EPA 0 765 829 A1 im wesentlichen bereits vorweggenommen. Auch die in der OS DE 42 18 331 A1 vorgesehenen Zugfedern zum Straffziehen der Behältniswand weisen in diese Richtung.
In der als Ergänzung zur obigen idee gedachten OS DE 196 28 430 A1 sowie im Gebrauchsmuster DE 296 12 185 U1 wird schliesslich vorgeschlagen, das Absaugrohr bzw. den Absaugkopf mit einer Gewichtsausgleichseinrichtung zu versehen, vorzugsweise in Form eines über einen Seilzug damit verbundenen Gegengewichts. Dabei wird dasselbe Prinzip angewandt, wie man es beispielsweise von Garagentoren her kennt. Indem jedoch das Gegengewicht etwas geringer eingestellt wird als das Gewicht des Absaugrohrs inklusive Absaugkopf, weisen letztere ein der Differenz entsprechendes Restgewicht auf. Dadurch wird erreicht, dass die - gewichtsabhängige - Eintauchtiefe des Saugrohres stets in einem bestimmten Bereich liegt. Ist jene nämlich zu gering, besteht die Gefahr, dass das Absaugrohr bzw. dessen Saugöffnung bei sinkendem Füllstand den Kontakt mit der Oberfläche des Füllgutes verliert und doss der Förderstrom deswegen abnimmt oder gar unterbrochen wird. Ist die Eintauchtiefe des Absaugrohres dagegen zu gross, besteht andererseits die Gefahr, dass wegen des zu hohen Drucks durch das Füllgut eine Verstopfung des Rohres eintritt. Überdies kann sich sonst das Absaugrohr unerwünschterweise auf den Grund des Sackes durchsaugen und dort die Folie ansaugen, wobei der Entleervorgang ebenfalls gestoppt wird. Die Bedienung der in der besagten Erfindung vorgesehenen Ausgleichsvorrichtung in der vorzugsweisen Form eines Gewichtszuges dürfte indessen spätestens dann ziemlich umständlich werden, wenn eine Anpassung an die Art des Schüttgutes erforderlich wird. Aber auch das Anheben des Saugkopfes im Anschluss an die Entleerung erfordert ein manuelles Eingreifen.

Die zuletzt erwähnten Vorrichtungen bzw. Vorkehrungen stellen zwar Fortschritte gegenüber den früher üblichen Verfahren dar und bringen auch mehr Möglichkeiten zu einem automatischen Betrieb mit sich, weisen aber noch etliche Nachteile auf, insbesondere was den störungsfreien Betrieb und den automatischen Ablauf betrifft. Bei den vorgeschlagenen Anlagen kommen nämlich nach wie vor relativ häufig Verstopfungen oder andere Unterbrüche vor, was nicht nur auf die mangelhafte Konstruktion der eingesetzten Saugköpfe, sondern in erster Linie auf die Art und Weise zurückzuführen ist, wie diese dem Füllgut-Niveau nachgeführt werden. Ausserdem sind die bisher zur Halterung verwendeten, quaderförmigen Gerüste umständlich und schlecht bestückbar, insbesondere wenn als Transportmittel Hubstapler zum Einsatz kommen. Schliesslich ist das Problem der Aufhängung bzw. Fixierung des Sackrandes noch nicht optimal gelöst.

Die vorliegende Erfindung stellt sich nun die Aufgabe, eine Vorrichtung zum Entleeren von rieselfähigem Schüttgut aus einem flexiblen, sackartigen Behältnis mittels eines von oben her eingeführten Saugers zu schaffen, welche eine einfache Handhabung, z.B weitgehend automatisch und störungsfrei gewährleistet, bei der die aus einem Transportbehälter entnommene Menge gut kontrolliert werden kann.

Die Aufgabe wird mit Hilfe der erfindungsgemässen Ausbildungsmerkmale des Patentanspruchs 1 gelöst. Vorteilhafte Weiterbildungen der Erfindung sind Gegenstand der abhängigen Merkmale.

Die erfindungsgemässe Vorrichtung weist ähnliche Grundkomponenten auf wie die bereits bekannten Modelle verwandter Sackentleerungsstationen. Sie enthält also einen über einen ersten Seilzug und eine Kraft höhenmässig verstellbaren, mit einem Vibrator versehenen Saugkopf, welcher in das Füllgut eintaucht und mit einem das Füllgut fördernden, einer Pumpe angeschlossenen flexiblen Rohr verbunden ist. Dabei ist die nach oben ziehende Kraft während der Entleerung in etwa konstant und entspricht nahezu dem Eigengewicht des Saugkopfes sowie der damit verbundenen Ausstattung. Die Differenz zwischen Eigengewicht und Gegenkraft entspricht dem Auflagegewicht des Saugkopfes und beeinflusst die Eindringtiefe Ins Füllgut. Ferner ist eine Halterung für das Behöltnis vorgesehen, welche über einen anderen, zweiten Seilzug sowie einen pneumatischen Zylinder ebenfalls, aber unabhängig vom ersten Seilzug höhenmässig verstellbar ist. Dabei ist die aufgrund des pneumatischen Zylinders nach oben ziehende Kraft während der Entleerung konstant bzw. vorgebbar. Dadurch wird das Behältnis während des Entleerens automatisch gestrafft und hebt bei Unterschreiten eines Restgewichts vom Boden ab. Schliesslich ist noch ein Gerüst mit einem oberen Horizontalbalken vorhanden, an welchem beide Seilzüge befestigt sind.

Die erfindungsgemässe Vorrichtung ist im speziellen dadurch gekennzeichnet, doss zur Erzeugung der den Saugkopf nach oben ziehenden Kraft anstelle eines Gegengewichts ein weiterer pneumatischer Zylinder vorgesehen ist, welcher beim im Verlaufe der Entleerung erfolgenden langsamen Absenken des Saugkopfes ruckartig reagiert. Dadurch gräbt sich der Saugkopf ähnlich wie ein Bagger stossweise in das Füllgut ein, was vorteilhaft ist für den Prozess. Dieses ruckartige Reagieren tritt nur bei der pneumatischen, erfindungsgemässen Version ein und rührt daher, dass das entsprechende Druckregelventil nicht kontinuierlich in Aktion ist, sondern erst bei einer minimalen Veränderung des Systemdrucks anspricht.
Der mit diesem ersten Seilzug verbundene pneumatische Zylinder wird dabei mit Vorteil von zwei wahlweise einschaltbaren Druckreglern angesteuert, wobei der eine, auf einen höheren Druck eingestellte Regler beim Heben des Saugkopfes - also nach erfolgter Entleerung des Behältnisses - und der andere, auf einen niedrigeren Druck eingestellte Regler als Gewichtskompensator beim Senken des Saugkopfes - also während der Entleerung des Behältnisses - in Aktion ist. Die Vorgabe dieser beiden an sich einstellbaren Druckwerte trägt zur Vereinfachung des Arbeitsablaufes bei. Da dieser erste, für das Heben und Senken des Saugkopfes zuständige Seilzug einen wesentlich längeren Weg als der zweite, für das Heben und Senken des Behältnisrandes zuständige Seilzug zurücklegen muss, wird er vorzugsweise mit einer Übersetzung versehen nach dem Prinzip eines Flaschenzugs.

Der andere pneumatische Zylinder, welcher mit dem zum Heben und Senken des Behältnisrandes zuständigen Seilzug verbunden ist, braucht dagegen nur von einem einzigen Druckregler angesteuert zu werden. Dieser erlaubt die Einstellung eines gewünschten Restgewichts, vorzugsweise eines Gewichts zwischen 60 und 100 kg, bei dessen Erreichen das Behöltnis abgehoben wird. Damit jedoch nach erfolgter Entleerung ein Absenken der Behältnis-Halterung bzw. des Behältnisses möglich wird, ist bei diesem pneumatischen Zylinder noch eine Drossel zur Entlüftung vorzusehen, mittels welcher die Absenkgeschwindigkeit eingestellt werden kann. Ferner ist die Möglichkeit vorgesehen, dass beim Erreichen des Anschlags automatisch ein Warnsignal erfolgt, vorzugsweise mittels eines Blinklichts. Zur Auslösung des Warnsignals bzw. zur Einschaltung des Blinklichts wird mit Vorteil am unteren Ende des pneumatischen Zylinders ein Magnetschalter vorgesehen, welcher vom Zylinderkolbenautomatisch betätigt wird. Diese Vorkehrung erhöht den Automatisationsgrad der Anlage zusätzlich, indem es dank der Möglichkeit des von weitem wahrnehmbaren Warnsignals für den Betreiber nicht erforderlich ist, sich dauernd neben der Anlage aufzuhalten.

Von besonderer Wichtigkeit ist ferner die Konstruktion des Saugkopfes, wobei hier von der bereits üblichen, konischen Grundform ausgegangen wird. Der vorzugsweise vorgeschlagene Saugkopf unterscheidet sich jedoch von herkömmlichen Saugköpfen und ist so konstruiert, dass er sich nicht am Behältnis festsaugen kann und dennoch keiner voluminösen und umständlichen Ummantelung bedarf. Dies wird prinzipiell dadurch bewerkstelligt, dass er nicht nur ein nach unten offenes Saugrohr aufweist, sondern zusätzlich noch seitlich angebrachte Löcher.
Die vorzugsweise Ausführungsform besteht dabei wenigstens aus einem unterseitig offenen Rohr, einem konzentrisch dazu angeordneten, mit der Spitze nach unten weisenden Hohlkegel (Konus) sowie einem die Basis des Hohlkegels bildenden Deckel. Sowohl das Rohr als auch der Mantel des Hohlkegels sind in ihren unteren Bereichen mit Löchern perforiert, welche beim ersteren vorzugswelse rund sind und beim letzteren vorzugsweise eine in Vertikalrichtung längliche Form (Längsschlitze) aufweisen. Hierbei werden am besten drei bis fünf runde Löcher sowie acht Längsschlitze vorgesehen. Infolgedessen kann das Füllgut sowohl durch die untere Öffnung des Rohres als auch durch die seitlichen Löcher im Kegel sowie anschliessend durch die seitlichen Löcher im Rohr aufgesaugt werden. Damit wird die Verstopfungsanfälligkeit des Saugkopfs vermindert. Zur Ermöglichung einer Falschluftzufuhr ist ein mit dem Absaugschlauch verbundenes innenrohr in das Saugkopf-Rohr eingelassen und daran in gewünschter Lage fixierbar, und zwar derart, dass zwischen den beiden Rohren ein Spalt für von oben her einströmende Luft offen ist. Durch Veränderung der relativen Rohrlage ist zudem die Falschluftzufuhr auf einfache Weise verstellbar.

Der Vibrator wird vorzugsweise exzentrisch im innern des Saugkopf-Kegels angeordnet. Zur Ausbalancierung ist ein Gegengewicht anzubringen. Ein weiterer Automationsfaktor der vorgeschlagenen Erfindung besteht in der Möglichkeit, doss der Vibrator bei jedem Schaltzyklus infolge des auftretenden Unterdrucks automatisch eingeschaltet wird, wobei die entsprechende Steuerung aufgrund eines im Absaugsystem vorgesehenen Drucksensors erfolgt. Der Vibrator ist also nicht ununterbrochen in Betrieb, sondern nur dann, wenn eine Absaugung stattfindet.

Im Unterschied zu herkömmlichen Anlagen ist bei der vorliegenden Anlage das Gerüst vorzugsweise in Form eines einmastigen Galgens vorgesehen, welcher auf einem vorzugsweise rechteckigen oder gabelförmigen Sockel fusst. Ein solches Gerüst ist wegen der einfacheren Zugänglichkeit besser bestückbar als ein quaderförmiges Gerüst, insbesondere wenn als Transportmittel Hubstapler zum Einsatz kommen. Der Horizontalbalken des Gerüsts und damit auch der Anschlag des Seilzugs zur Hebung des Behältnisses wird dabei mit Vorteil höhenmässig verstellbar vorgesehen, beispielsweise indem der Mast teleskopierbar ist. Diese einfache Verstellmöglichkeit stellt insofern einen Beitrag zum störungsfreien und automatischen Betrieb der Anlage dar, als bei einer allzugrossen Diskrepanz zwischen Behältnishöhe und Höhe des Anschlags der Saugkopf beim abschliessenden Anheben des Gebindes über eine längere Strecke den Rückwärtsgang einlegen, also wieder angehoben werden müsste, was nicht unproblematisch ist.

Ausserdem kann das Gerüst bzw. der Sockel aus Mobilitätsgründen mit Rollen bzw. Rädern versehen sein, vorzugsweise mit zwei grösseren seitlich des Masts und zwei kleineren in den Endbereichen des Sockels bzw. dessen Gabel-Zinken, wobei die Rollen vorzugsweise schwenkbar sind. Gedacht ist dabei an Rollen, welche vom Prinzip her gleich funktionieren wie die bei Rolltischen oder rollenden Untersätzen etc. häufig eingesetzten schwenkbaren Rollen bzw. Räder,

Schliesslich wird noch eine verbesserte Halterung für das Behältnis vorgeschlagen. Sie besteht im wesentlichen aus einem massiven Ring, dessen Peripherie mit zwei parallel verlaufenden, nach aussen hin weisenden Wulsten versehen ist und über welchen der Rand des Gebindes gestülpt werden kann. Am Ring sind ferner vorzugsweise wenigstens fünf zwischen die Sicken passende Stempel vorgesehen, welche mittels als Griffe ausgebildeter Kniehebel von aussen her auf die Peripherie des Rings bzw. auf den darauf liegenden Gebinderand gepresst werden können und in dieser Stellung arretierbar sind. Um des Abrutschen des Behältnisses zu vermeiden, ist die Oberfläche des Rings an seiner Peripherie mit Vorteil aufgerauht, vorzugsweise sandgestrohlt. Es handelt sich dabei um einen Schnellverschluss, welcher ein speditiveres Arbeiten ermöglicht und infolge der besseren Lastverteilung zudem den Behältnisrand weniger stark beansprucht, als es punktuell wirkende Aufhängungen tun.

Die vorgeschlagene automatisierte Sackentleerungsstation wird im folgenden anhand von Ausführungsbeispielen näher beschrieben. Sie sind unter anderem auch in den Zeichnungen dargestellt. Es zeigen:
- Fig. 1: eine stationäre Station (Seitenansicht);
- Fig. 2: die Anordnung der beiden pneumatischen Zylinder (Sicht von hinten);
- Fig. 3: das Schaltschema für die Druckregelung der pneumatischen Zylinder;
- Flg. 4: die vorzugsweise Ausführungsform des Saugkopfes (Querschniff);
- Fig. 5: den Sockelbereich eines Gerüsts mit Rollen (perspektivische Sicht) und
- Fig. 6: den Ausschnitt einer Halterung für das Behältnis (Querschnitt).

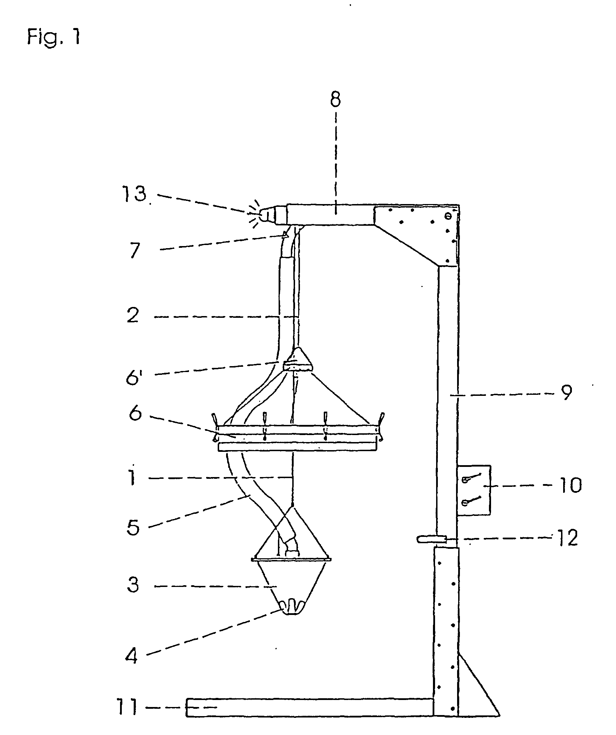

Aus Fig. 1 sind die wichtigsten Komponenten der erfindungsgemässen Vorrichtung ersichtlich, wobei hier die möglichen Rollen im Sockelbereich weggelassen sind. Als Gerüst ist ein Galgen mit einem Sockel 11, einem Mast 9 sowie einem Horizontalbalken 8 gewählt. Unmittelbar zum Gerüst gehört auch der Warnblinker 13, der Steuerkasten 10 sowie der rückseitige Anschlag 12. Letzerer ist ein Hilfsmittel zur Positionierung des Behältnisses, welches vorzugsweise in Form einer Oktabine mit einem Hubstapler von vorne her (im Bild also von links her) zugeführt wird. Am Horizontalbalken hängen die Seilzüge 1 und 2. An ersterem ist der Saugkopf 3 befestigt, bei dem die seitlichen, schlitzförmigen Öffnungen 4 sichtbar sind. Das Füllgut wird über das flexible Rohr 5 abgesaugt, worin sich der Drucksensor 7 für den Vibrator befindet. Am zweiten Seilzug ist die Halterung für das Behältnis angebracht. Sie besteht aus einem Haltering 6, welcher mittels der Aufhängung 6' am Seilzug befestigt ist.

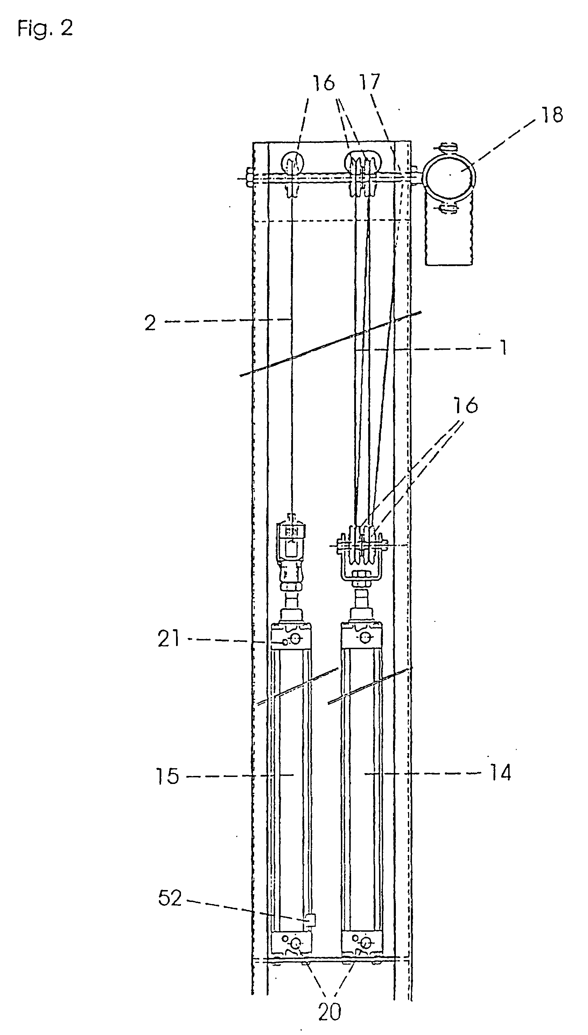

In Fig. 2 ist die Anordnung der beiden pneumatischen Zylinder im Mast dargestellt. Der pneumatische Zylinder 14 ist für das Heben und Senken des am Seilzug 1 befestigten Saugkopfes vorgesehen und bedarf wegen des erforderlichen langen Hubweges einer Übersetzung. Diese kommt durch einen Flaschenzug zustande, wobei einerseits frei drehbare Rollen 16 und andererseits eine Befestigung 17 am Seilende erforderlich sind. Für den mit dem pneumatischen Zylinder 15 verbundenen Seilzug 2, der für das Heben und Senken des Behältnisses zuständig ist, bedarf es dagegen keiner Übersetzung, weil der Hubweg relativ kurz ist. Von hinten sichtbar ist ausserdem der Absaugrohr-Bogen 18. Beide pneumatische Zylinder sind überdies unterseitig mit Druckausgleichsöffnungen 20 versehen. In Zylinder 15 ist ferner ein Magnetschalter 52 angebracht, mit dessen Hilfe automatisch der Warnblinker eingeschaltet wird, sobald der Kolben zum unteren Anschlag gelangt ist.

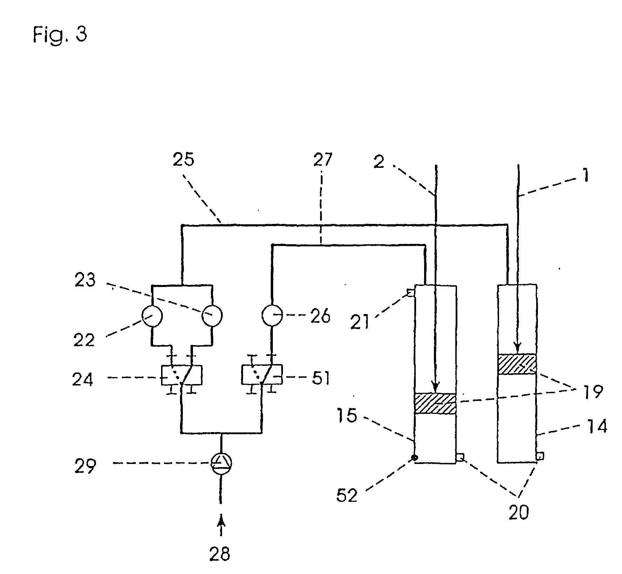

In Fig. 3 wird eine schematische Darstellung der für die beiden pneumatischen Zylinder erforderlichen Druckregler, Zuleitungen und Ventile gegeben. Die DruckluftZufuhr erfolgt darin aus der Richtung des Pfeils 28. Das Rückschlagventil 29 sorgt dafür, dass bei einer allfälligen Abschaltung der Zuleitung keine Luft zurückfliessen kann. 25 und 27 stellen die Druckluftleitungen von den Druckreglern 22, 23 und 26 zu den pneumatischen Zylindern 14 und 15 dar, welche mit den Enden der Seilzüge 1 bzw. 2 verbunden sind. Ferner sind die Kolben 19 in diesen Zylindern sowie die erforderlichen Druckausgleichsöffnungen 20 und der bereits erwähnte Magnetschalter 52 eingezeichnet.
Die für den pneumatischen Zylinder 14 zuständigen Druckregler 22 und 23 können über das 5/2-Weg-Ventil 24 wahlweise angesteuert werden: Entweder ist - wie in der Zeichnung hervorgehoben - der für die Gleichgewichtskompensation des Saugkopfes zuständige Druckregler 23 in Betrieb, oder aber - im Falle des Weges über die gestrichelte Linie - der für das Heben des Saugkopfes zuständige Druckregler 22. Ersterer ist auf einen geringeren Sollwert eingestellt als letzterer. Die Sollwerte hängen vom Gewicht des Saugkopfes bzw. von der gewünschten Eindringtiefe beim Füllgut ab. In der Praxis sind für die beiden Druckregler 22 und 23 Sollwerte von maximal fünf bar bzw. maximal drei bar angebracht.
Der für die Hebung des Behältnisses zuständige pneumatische Zylinder 15 bedarf dagegen nur eines einzigen Druckreglers 26, welcher über das 5/2-Weg-Ventil 51 angesteuert wird. Zur Entlüftung des Zylinders, also zur Absenkung der Behältnis-Halterung, dient die Drossel 21, welche auf einen gewünschten Wert einstellbar ist.

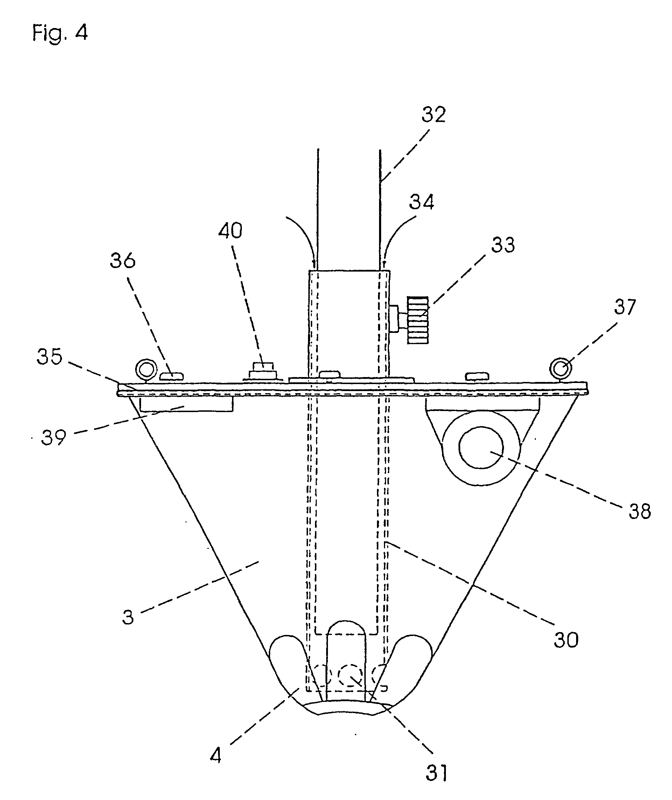

Fig. 4 zeigt einen erfindungsgemässen Saugkopf im Detail. 3 stellt dabei den Mantel des Hohlkegels dar, 32 denjenigen des mit dem Absaugschlauch verbundenen Innenrohrs und 30 denjenigen des Aussenrohrs. Letzteres enthält am unteren Ende seitliche Ansauglöcher 31, welche in den Schlitzen 4 des Kegelmantels ihre Fortsetzung finden. Ausserdem sind die Rohre gegen unten hin offen. Mittels der Stellschraube 33 ist eine Fixierung möglich. Die Falschluft wird über den Ringspalt 34 angesaugt und kann durch Verstellen der relativen Rohrposition beeinflusst werden. Ferner ist im Saugkopf ein Vibrator 38 mit einem Gegengewicht 39 sowie einem elektrischen Stecker 40 vorhanden. Der Deckel 35 ist unterseitig mit einer Gummidichtung versehen und oberseitig mit Schnellverschluss-Schrauben 36 sowie mit Befestigungs-Laschen 37.

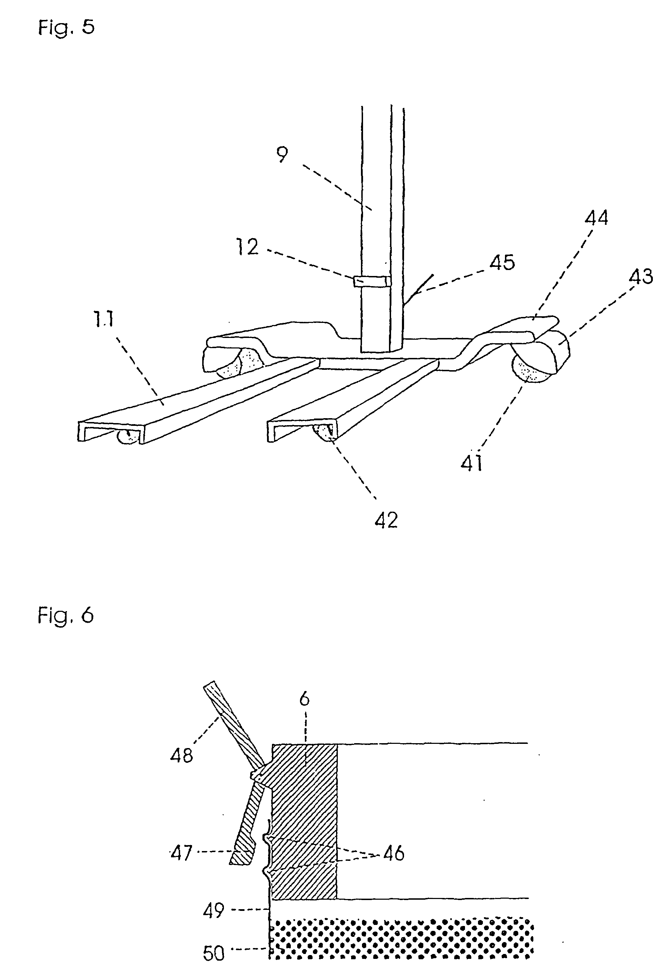

Fig. 5 zeigt den unteren Bereich eines mobilen, einmastigen Gerüsts mit einem gabelförmigen Sockel 11 und insgesamt vier Rollen. Dabei sind die zwei grösseren Seitenrollen 41 in schwenkbaren Rollenlagern 43 vorgesehen und an entsprechenden überhöhten Rollenhaltern 44 befestigt, während die zwei kleineren, ebenfalls schenkbaren Rollen in den Endbereichen der Gabel-Zinken an deren Unterseite angebracht sind. Der Deichsel 45 dient zum Manövrieren des Ganzen, während der hintere Anschlag 12 wie gesagt ein Hilfsmittel zur Positionierung des Behältnisses darstellt.
Fig. 6 zeigt die linke Seite eines erfindungsgemässen Schnellverschlusses mit dem Haltering 6 für die flexible Behältniswand 49. Diese wird über die vorstehenden Sicken 46 gezogen und mittels des Stempels 47 angepresst, welcher über den Kniehebel 48 betätigt wird. 50 stellt das Füllgut dar. Ein einzelner Haltering ist mit wenigstens fünf solcher Stempel ausgestattet und vorzugsweise im Bereich seines Kontakts mit der Behältniswand aufgerauht.

Der Verfahrensablauf lässt sich folgendermassen beschreiben:
In der Ausgangsposition hängen der Haltering 6 wie auch der Saugkopf 3 hoch, und zwar im Anschlag. Nachdem dos Behältnis unter dem Galgen positioniert ist, werden der Saugkopf wie auch der Haltering gesenkt, wobei der Saugkopf auf das abzusaugende Material zu liegen kommt. Zur Senkung des Saugkopfes (Seilzug 1) steuert man den pneumatischen Zylinder 14 durch Umschalten des 5/2-Weg-Ventils 24 über den Druckregler 23 an, während man zur Senkung des Halterings (Seilzug 2) die Druckluftzufuhr 27 zum pneumatischen Zylinder 15 mittels des 5/2-Weg-Ventils 51 von Heben auf Senken umschaltet. (Die Senkgeschwindigkeit wird mittels der Enlüftungsdrossel 21 eingestellt.) Nun stülpt der Betreiber den Rand des flexiblen Behältnisses 49 über den Haltering und fixiert ihn. Anschliessend lässt er den Haltering mittels des pneumatischen Zylinders 15 nach oben ziehen, indem er mittels des 5/2-Weg-Ventils 51 das Druckreduzierventil 26 bzw. die Druckluftzufuhr 27 einschaltet. Dadurch strafft sich die Behältniswand, ohne dass das Behältnis vom Boden abgehoben wird. Nach Einschalten des Saugers läuft der Entleerungsvorgong automatisch ab, wobei der Saugkopf immer weiter nach unten sinkt und die Behältniswand immer weiter nach oben gezogen wird. Sobald der grösste Teil des inhalts entleert ist; beginnt sich dos Behältnis vom Boden abzuheben, wobei dessen Basis in der Mitte nach unten hängt. Währenddessen wird der Rest des Füllguts abgesaugt. Schliesslich gelangt das Behältnis bis zum oberen Anschlag, wobei automatisch der Magnetschalter 52 betätigt und damit der Warnblinker 13 eingeschaltet wird. Damit ist die Entleerung abgeschlossen. Der Betreiber muss nun durch Abschalten der Druckluftzufuhr 26 mittels des 5/2-Weg-Ventils 51 den Haltering für das Behöltnis nach unten lassen und dieses daraufhin entfernen. Schliesslich werden durch Einschalten des Druckreglers 26 der Haltering sowie durch anschliessendes Einschalten des Druckreglers 22 der Saugkopf wieder nach oben gezogen und sind so für einen neuen Arbeitsgang bereit.

Die vorgeschlagene Sackentleerungsstation mit einem von oben her eingeführten Sauger weist gegenüber den bisher verwendeten, ähnlichen Stationen erhebliche Vorteile auf:
Erfindungsgemäß ist zur teilweisen Gewichtskompensation des Saugkopfes ein pneumatischer Zylinder vorgesehen, dessen langsomes Absenken im Verlaufe der Entleerung ruckartig erfolgt, was sich vorteilhaft auf den Absaugvorgang auswirkt. Ebenfalls zu einer Verbesserung der Absaugwirkung bzw. zu einem störungsfreien Ablauf des Absaugvorgangs trägt der erfindungsgemässe Sougkopf bei, welcher u.a. nicht nur ein nach unten offenes Sougrohr aufweist, sondern zusätzlich noch seitlich angebrachte Öffnungen. Indem der im Saugkopf vorhandene Vibrator bei Unterdruck aufgrund eines entsprechenden Sensors automatisch eingeschaltet wird, erhöht sich der Automationsgrad der Anlage. Ebenfalls zur Erhöhung des Automationsgrades trägt das vorgesehene Warnsignal bei, welches von der Sackhalterung beim Erreichen des Anschlags ausgelöst wird. Insgesamt gewährleistet die Anlage also einen weitgehend störungsfreien und automatischen Betrieb. Darüberhinaus werden Veränderungen beim Traggerüst sowie bei der Sackhalterung vorgeschlagen, welche das Handling verbessern. Vorteilhaft sind dabei insbesondere der Einsatz eines einmastigen, mobilen Galgens sowie eines einfachen Schnellverschlusses für die Sackaufhängung.

## Patentansprüche

1. Vorrichtung zum Entleeren von rieselfähigem Schüttgut aus einem flexiblen, sackartigen Behältnis mittels eines von oben her eingeführten Saugers, wenigstens bestehend aus einem über einen Seilzug (1) und eine Kraft höhenverstellbaren, mit einem Vibrator versehenen Saugkopf (3), welcher in das Füllgut eintaucht und mit einem das Füligut fördernden, an einer Pumpe angeschlossenen Rohr (5) verbunden ist, wobei die nach oben ziehende Kraft während der Entleerung in etwa konstant ist und nahezu dem Eigengewicht des Saugkopfes (3) entspricht, einer über einen anderen Seilzug (2) sowie einen pneumatischen Zylinder (15) ebenfalls, aber unabhängig vom ersten Seilzug (1) höhenverstellbaren Halterung (6, 6') für das Behältnis, die am oberen Rand des Behältnisses angreift, wobei die aufgrund des pneumatischen Zylinders (15) nach oben ziehende Kraft während der Entleerung konstant ist bzw. vorgegeben werden kann und bei Unterschreiten eines Restgewichts das Behältnis vorzugsweise vom Boden abhebt, **dadurch gekennzeichnet, dass** zur Erzeugung der den Saugkopf (3) nach oben ziehenden Kraft ein weiterer pneumatischer Zylinder (14) vorgesehen ist, welcher mittels eines einschaltbaren Drückreglers, der erst bei einer Veränderung des Systemdrucks anspricht, derart angestenert wird, daß ein im Verlaufe der Entleerung erfolgendes Absenken des Saugkopfes (3) ruckartig erfolgt.

2. Vorrichtung nach Anspruch 1, **dadurch gekennzeichnet, dass** der mit dem Seilzug (1) verbundene pneumatische Zylinder (14) von zwei wahlweise einschaltbaren Druckreglern (22,23) angesteuert wird, wobei der eine, auf einen höheren Druck eingestellte Regler beim Heben des Saugkopfes und der andere, auf einen niedrigeren Druck eingestellte Regler als Gewichtskompensator beim Senken des Saugkopfes, also während der Entleerung des Behältnisses, in Aktion ist.

3. Vorrichtung nach wenigstens einem der Ansprüche 1 und 2, **dadurch gekennzeichnet, dass** der Seilzug (1) mit einer Übersetzung versehen ist nach dem Prinzip eines Flaschenzugs.

4. Vorrichtung nach Anspruch 1, **dadurch gekennzeichnet, dass** der mit dem Seilzug (2) verbundene pneumatische Zylinder (15) einerseits von einem Druckregler (26) angesteuert wird, welcher die Einstellung eines gewünschten Restgewichts erlaubt, vorzugsweise eines Gewichts zwischen 60 und 100 kg, und dass er andererseits zur Entlüftung mit einer Drossel (21) versehen ist, womit ein Absenken der Behältnis-Halterung bzw. des Behältnisses, vorzugsweise nach erfolgter Entleerung möglich wird.

5. Vorrichtung nach wenigstens einem der Ansprüche 1 und 4, **dadurch gekennzeichnet, dass** beim Erreichen des Anschlags des zweiten, für die Behältnis-Halterung zuständigen Seilzugs (2) automatisch ein Warnsignal erfolgt.

6. Vorrichtung nach Anspruch 5, **dadurch gekennzeichnet, dass** zur Auslösung des Warnsignals bzw. zur Einschaltung des Blinklichts am unteren Ende des für das Heben des Behältnisses zuständigen pneumatischen Zylinders (15) ein Magnetschalter (52) vorgesehen ist, welcher vom Zylinderkolben beim Erreichen des Anschlags automatisch betätigt wird.

7. Vorrichtung wenigstens nach einem der Ansprüche 1 bis 6, **dadurch gekennzeichnet, dass** der Saugkopf wenigstens aus einem unterseitig offenen Rohr (30), einem konzentrisch dazu angeordneten, mit der Spitze nach unten weisenden Hohlkegel sowie einem die Basis des Hohlkegels bildenden Deckel (35) besteht, und dass das Rohr in seinem unteren Bereich mit vorzugsweise runden Löchern (31) und der Hohlkegel unterseitig mit vorzugsweise in Vertikalrichtung länglichen Löchern perforiert ist, so dass das Schüttgut sowohl durch die untere Öffnung des Rohres als auch durch die seitlichen Löcher im Kegel sowie anschliessend durch die seitlichen Löcher im Rohr aufgesaugt werden kann.

8. Vorrichtung nach Anspruch 7, **dadurch gekennzeichnet, dass** zur Ermöglichung einer Falschluftzufuhr ein mit dem Absaugschlauch verbundenes Innenrohr (32) in das Saugkopf-Rohr (30) eingelassen und daran in gewünschter Lage fixierbar ist, und zwar derart, dass zwischen den beiden Rohren ein Spalt (34) für von oben her einströmende Luft offen ist, wobei die Falschluftzufuhr durch Veränderung der relativen Rohrlage verstellbar ist.

9. Vorrichtung nach wenigstens einem der Ansprüche 1 bis 8, **dadurch gekennzeichnet, dass** der Vibrator exzentrisch im Innern des Saugkopf-Kegels (3) angeordnet ist und dass zu dessen Ausbalancierung ein Gegengewicht (39) angebracht ist.

10. Vorrichtung nach wenigstens einem der Ansprüche 7 bis 9, **dadurch gekennzeichnet, dass** der Vibrator, gesteuert über einen Drucksensor (7), während des Absaugvorgangs automatisch eingeschaltet wird.

## Claims

1. An apparatus for the emptying of granulated pourable material from a flexible, sack-like container with the aid of a suction mechanism inserted for this purpose from above and consisting at least of one suction head (3) equipped with a vibrator, the height of which can be adjusted with the aid of a pulley (1), and which is submerged into the granulated material and connected with a pipeline (5) that is in turn connected to a pump, and which transports the granulated material, whereby the upward suction occurring during the emptying process will be roughly constant, and whereby it will further be roughly equal to the own weight of the suction head (3); whereby a pneumatic cylinder (15) is also height adjustable in its holder mechanism (6, 6) for the container with the aid of another pulley (2) that is independent from the first pulley (1); whereby the container is further gripped at its upper rim, and whereby the suction force pulling in an upward direction due to the pneumatic cylinder (15) will be constant during the emptying process, i.e. can be adjusted to be constant; whereby an undercutting of the residual weight will preferably lift the container from the ground, which in turn is **characterised by** the inclusion of a further pneumatic cylinder (14) for the generation of the upward force that pulls the suction head (3), whereby this further cylinder only reacts when there is a change in the system pressure, and which is controlled in such a way that the suction head (3) is lowered in step-like movements during the emptying process.

2. An apparatus according to Claim 1 that is **characterised in that** the pneumatic cylinder (14) connected to the pulley (1) can be controlled with the aid of two optional pressure regulators (22, 23), whereby the first regulator is set to a higher pressure during the lifting of the suction head, and the second is set to a lower pressure and acts as a weight compensator during the lowering of the suction head, and whereby this second regulator is also active during the emptying of the container.

3. An apparatus according to either Claim 1 or 2 that is **characterised in that** the pulley (1) is equipped with a transmission mechanism according to the principle of the block-and-tackle system.

4. An apparatus according to Claim 1 that is **characterised in that** the pneumatic cylinder (15) connected to the pulley (2) will firstly be controlled by the pressure regulator (26) that will enable the setting of the desired residual weight, and preferably to a weight between 60 and 100 kg, and that will secondly be equipped with a throttle (21) for ventilation purposes, whereby a lowering of the container holder, i.e. of the container itself, will preferably be possible after it has been emptied.

5. An apparatus according to either one of the Claims 1 to 4 that is **characterised in that** an automatic warning signal will be activated when the second pulley (2) that controls the container holder reaches the stopping point.

6. An apparatus according to Claim 5 that is **characterised in that** it is equipped with a magnetic switch (52) that is responsible for activating the warning signal, i.e. that switches on the warning light at the lower end of the pneumatic cylinder (15) that lifts the container, and that will be automatically activated by the cylinder piston when it reaches the stopping point.

7. An apparatus according to one of the Claims 1 to 6 that is **characterised in that** the suction head consists of at least one pipe (30) with an opening on the underside, a concentrically orientated hollow cone whose tip points downwards, as well as a lid (35) that forms the basis of the hollow cone; the pipe is further equipped in its lower region with a number of preferably round perforations (31), and the hollow cone is fitted on its underside with a number of preferably vertically orientated, elongated perforations, so that the granulated material can flow through the lower openings of the pipe as well as through the side perforations in the cone, and can then be sucked through the side perforations of the pipe.

8. An apparatus according to Claim 7 that is **characterised in that** it is further equipped with an exhaust hose that is connected to the internal pipe (32) leading into the suction head (30) and that can be fixed in one of several desired positions for the supply of forced air ventilation in such a way that a space (34) is created between the two pipes for the flow of air from above, whereby the forced air ventilation is adjustable with the aid of the relative pipe position.

9. An apparatus according to at least one of the above Claims 1 to 8 that is **characterised in that** the vibrator is fitted eccentrically inside the suction head cone (3), and that is further equipped with a counter weight (39) for the balancing of the same.

10. An apparatus according to at least of the above Claims 7 to 9 that is **characterised in that** the vibrator that is controlled with the aid of the pressure sensor (7) can be automatically switched on during the suction process.

## Revendications

1. Procédé pour vider une matière en vrac semi-fluide d'un récipient souple du type sac, au moyen d'un suceur introduit par le haut qui est constitué par au moins une tête d'aspiration (3), réglable en hauteur au moyen d'une commande à câble (1) et d'une force et munie d'un vibrateur, et qui plonge dans la matière en vrac et est reliée à un tube (5) transportant la matière en vrac et raccordé à une pompe, la force tirant vers le haut étant à peu près constante pendant le vidage et correspondant approximativement au poids propre de la tête d'aspiration (3), par une monture (6, 6') pour le récipient, elle aussi réglable en hauteur au moyen d'une autre commande à câble (2) et d'un cylindre pneumatique (15) mais indépendamment de la première commande à câble (1), qui attaque le bord supérieur du récipient, la force tirant vers le haut sous l'action du cylindre pneumatique (15) étant constante pendant le vidage ou pouvant être prédéterminée et soulevant de préférence le récipient du sol lors du passage au-dessous d'un poids résiduel, **caractérisé en ce que**, pour la production de la force qui tire la tête d'aspiration (3) vers le haut, il est prévu un cylindre pneumatique supplémentaire (14) qui est piloté au moyen d'un régulateur de pression pouvant être mis en service, lequel répond seulement à une variation de la pression du système, de telle manière que l'abaissement de la tête d'aspiration (3) qui se produit pendant le déroulement du vidage ait lieu par à-coups.

2. Dispositif selon la revendication 1, **caractérisé en ce que** le cylindre pneumatique (14) relié à la commande à câble (1) est piloté par deux régulateurs de pression (22, 23) qui peuvent être mis sélectivement en service, l'un des régulateurs, qui est réglé sur une pression plus élevée, étant en action lors de l'élévation de la tête d'aspiration et l'autre régulateur, qui est réglé sur une pression plus basse, étant en action comme compensateur de poids, lors de l'abaissement de la tête d'aspiration, c'est-à-dire pendant le vidage du récipient.

3. Dispositif selon au moins une des revendications 1 et 2, **caractérisé en ce que** la commande à câble (1) est munie d'un dispositif de transmission opérant selon le principe du palan.

4. Dispositif selon la revendication 1, **caractérisé en ce que** le cylindre pneumatique (15) qui est relié à la commande à câble (2) est, d'une part, piloté par un régulateur de pression (26) qui permet d'établir un poids résiduel désiré, de préférence un poids d'entre 60 et 100 kg, et, d'autre part, équipé d'un étranglement (21) pour la décharge, ce qui permet un abaissement de la monture du récipient ou du récipient, de préférence après l'exécution du vidage.

5. Dispositif selon au moins une des revendications 1 et 4, **caractérisé en ce que**, lors de l'arrivée en butée de la deuxième commande à câble (2) affectée à la monture du récipient, un signal avertisseur se déclenche automatiquement.

6. Dispositif selon la revendication 5, **caractérisé en ce que**, pour le déclenchement du signal avertisseur ou pour la mise en circuit de la lumière clignotante, il est prévu à l'extrémité inférieure du cylindre pneumatique (15) affecté à l'élévation du récipient, un commutateur magnétique (52) qui est actionné automatiquement par le piston du cylindre au moment de l'arrivée en butée.

7. Dispositif selon au moins une des revendications 1 à 6, **caractérisé en ce que** la tête d'aspiration est composée d'au moins un tube (30) ouvert en bas, d'un cône creux disposé concentriquement à ce dernier, avec la pointe dirigée vers le bas, ainsi que d'un couvercle (35) qui forme la base du cône creux, et **en ce que** le tube est perforé dans sa région inférieure avec des trous (31), ronds de préférence, et le cône creux est perforé en bas avec des trous qui sont de préférence allongés dans la direction verticale, de sorte que la matière en vrac peut être aspirée vers le haut aussi bien à travers l'ouverture inférieure du tube qu'à travers les trous latéraux du cône, puis à travers les trous latéraux du tube.

8. Dispositif selon la revendication 7, **caractérisé en ce que**, pour permettre une prise d'air, un tube intérieur (32) relié au tuyau d'aspiration est emmanché dans le tube (30) de la tête d'aspiration et peut y être fixé dans une position souhaitée, à savoir de telle manière qu'une fente (34) soit ouverte entre les deux tubes pour l'air qui afflue d'en haut, la prise d'air pouvant être réglée par une modification de la position relative des tubes.

9. Dispositif selon au moins une des revendications 1 à 8, **caractérisé en ce que** le vibrateur est disposé excentriquement à l'intérieur du cône (3) de la tête d'aspiration, et **en ce qu'**un contrepoids (39) est prévu pour son équilibrage.

10. Dispositif selon au moins une des revendications 7 à 9, **caractérisé en ce que** le vibrateur est mis en service automatiquement pendant l'opération d'aspiration, sous la commande d'un capteur de pression (7).
